# EUROPÄISCHE PATENTSCHRIFT

(11) **EP 3 186 524 B1**
(45) Veröffentlichungstag und Bekanntmachung des Hinweises auf die Patenterteilung: **15.04.2020**
(21) Anmeldenummer: 15750419.2
(22) Anmeldetag: 12.08.2015
(51) Int. Cl.: F16C 35/02, F16C 17/06, F16C 27/02, F16C 27/08

(54) **AXIALLAGER UND HALTERUNG**
AXIAL BEARING AND RETAINER
PALIER AXIAL ET SUPPORT

(30) Priorität: 28.08.2014 DE 102014217221
(43) Veröffentlichungstag der Anmeldung: 05.07.2017
(73) Patentinhaber: SKF Marine GmbH, 20457 Hamburg (DE)
(72) Erfinder: HAMMERSCHMIDT, Detlef, 18119 Rostock (DE); RUSCH, Mathias, 21423 Winsen Luhe (DE); WRAGE, Marko, 24643 Struvenhütten (DE)
(74) Vertreter: Kuhstrebe, Jochen
(86) Internationale Anmeldenummer: PCT/EP2015/068569
(87) Internationale Veröffentlichungsnummer: WO 2016/030194

(56) Entgegenhaltungen:
- FR-A1- 2 333 156
- GB-A- 221 789
- JP-A- 2000 065 047
- JP-U- S6 337 818
- US-A1- 2012 037 425
- US-B1- 8 439 567

## Beschreibung

Die Erfindung betrifft ein Axiallager zur Aufnahme von axialen Belastungen, die auf einen Drehkörper einwirken, nach dem Oberbegriff des Patentanspruchs 1.

Ein derartiges Axiallager bzw. Schublager wird beispielsweise bei Wasserfahrzeugen zur Lagerung ihrer Propellerwelle eingesetzt. Verursacht durch Fertigungstoleranzen, Montagetoleranzen, statische und dynamische Wellenverformungen und dergleichen kann sich eine Winkeldifferenz zwischen der Schubwellenachse und der Axiallagergehäuseachse einstellen. Die Winkeldifferenz zwischen diesen beiden Achsen führt in Abhängigkeit seiner Größe zu einer ungleichmäßigen Verteilung der Axiallast auf die einzelnen Schubstücke bzw. Druckstücke des Axiallagers. Die infolge der ungleichmäßigen Axiallastverteilung höher belasteten Schubstücke unterliegen einer erhöhten thermischen Belastung und oft auch einem zusätzlichen Verschleiß, da durch die hydrodynamische Schmierung kein ausreichender Schmierfilm zwischen deren Gleitfläche und einem wellenseitigen Schubbund aufgebaut werden kann.

Aus der DD 209 016 A1 ist ein Axiallager zur Aufnahme von axialen Belastungen bekannt, das eine in einem Lagergehäuse drehbar gelagerte Schubwelle hat, die mit einem Drehkörper koppelbar ist und die zumindest einen Schubbund aufweist. Das Axiallager hat zudem eine Vielzahl von Schubstücken, die jeweils eine vordere Gleitfläche zum Gleitkontakt mit dem zumindest einen Schubbund haben. Zum Ausgleich von Winkeldifferenzen zwischen der Schubwellenachse und der Lagergehäuseachse sind die Schubstücke rückseitig über Druckstempel an axialen Hydraulikzylindern abgestützt. Die Hydraulikzylinder sind untereinander über eine Ringleitung fluidtechnisch miteinander verbunden, so dass, sobald ein Schubstück durch eine Lagerveränderung gegenüber den übrigen Schubstücken eine Über- und Unterbelastung erfährt, über die Ringleitung ein hydraulischer Lastausgleich erfolgt und die axiale Lage sämtlicher Schubstücke entsprechend angepasst wird. Die Hydraulikzylinder sowie die Ringleitung sind jedoch vorrichtungstechnisch und fertigungstechnisch aufwendig, leckageanfällig und wartungsintensiv. Insbesondere können Leckagen zu einem Totalausfall des Axiallagers führen.

Aus der DE 10 2008 037 677 A1 ist ein Axiallager bekannt, bei dem die Schubstücke ebenfalls an Hydraulikzylindern rückseitig abgestützt sind. Im Unterschied zu dem in der DD 209 016 A1 gezeigten Axiallager können die Schubstücke zweiteilig ausgeführt sein, wobei jeweils ein Schubstückkopf, der eine vordere Gleitfläche bildet, über eine Tellerfeder an einem Schubstückfuß abgestützt ist. Dieses Axiallager ist jedoch aus vorrichtungstechnischer und fertigungstechnischer Sicht noch komplizierter als das vorbeschriebene Axiallager nach der DD 209 016 A1.

Weiterer Stand der Technik ist beispielsweise in der DE 3326415 A1, der US 8 439 567 B1, der KR 100 748 595 B1, der US 2013 / 0 182 980 A1, der WO 81/00898 A1, der JP 2000 065047 A, der JP S63 37818 U, der FR 2 333 156 A1, der GB 221 789 A und der US 2012/037425 A1 gezeigt. US 8 439 567 B1 offenbart ein Axiallager gemäß dem Oberbegriff des Anspruchs 1.

Aufgabe der Erfindung ist es, ein Axiallager zur Aufnahme von axialen Belastungen, die auf einen Drehkörper einwirken, zu schaffen, das bei einem vorrichtungstechnisch und fertigungstechnisch geringen Aufwand eine hohe Funktionssicherheit und eine gleichmäßige Lastverteilung ermöglicht.

Diese Aufgabe wird gelöst durch ein Axiallager mit den Merkmalen des Patentanspruchs 1.

Ein erfindungsgemäßes Axiallager zur Aufnahme von axialen Belastungen, die auf einen Drehkörper einwirken, hat eine in einem Lagergehäuse drehbar gelagerte Schubwelle, die mit einem Drehkörper koppelbar ist und die zumindest einen Schubbund hat. Das Axiallager hat zudem eine Vielzahl von Schubstücken, die jeweils eine vordere Gleitfläche zum Gleitkontakt mit dem zumindest einen Schubbund haben und zwei beidseits des Schubbundes angeordnete Schubstückringanordnungen bilden. Zum Haltern der Schubstückringanordnungen hat das Axiallager zwei Halterungen. Erfindungsgemäß haben die Halterungen jeweils einen Positionierabschnitt zur ortsfesten Positionierung und einen Federringabschnitt zur axialelastischen Verformung beim Überschreiten einer auf zumindest einige der Schubstücke wirkenden Belastungsgrenze, wobei zwischen den Federringabschnitten und jeweils einem rückseitigen Gehäuseabschnitt ein Federspalt gebildet ist und wobei bezogen auf eine Längsachse der Schubwelle die Federringabschnitte radial außen und die Positionierabschnitte radial innen angeordnet sind und/oder die Federringabschnitte eine Vielzahl von in Umfangsrichtung nebeneinander liegenden Federringsegmenten aufweisen, wobei zur Bildung der Federringsegmente in die Federringabschnitte radiale Einschnitte eingebracht sind.

Erfindungsgemäß wird eine gleichmäßigere Lastverteilung auf mehrere Schubstücke durch eine federnde Halterung der Schubstücke erreicht. Die hochbelasteten Schubstücke übertragen größere Axialkräfte in eine federnde Schubstückhalterung, die daraufhin entsprechend ihrer Federkennlinie einen größeren Federweg in axialer Richtung realisieren. Entsprechend kleinere Federwege werden durch gering belastet Schubstücke realisiert. Durch die Kombination der federnden Halterungen der Schubstücke und dem Lastausgleich zwischen den Schubstücken in ein Bauteil, der federnden Schubstückhalterung, werden ein einfacher Aufbau und ein funktionssicherer Betrieb des Axiallagers bzw. Schublagers auch bei Vorhandensein eines Winkels zwischen der Schublagerwellenachse und der Lagergehäuseachse erreicht. Ein Ausrichten des erfindungsgemäßen Axiallagers zur Eliminierung von Winkelabweichungen zwischen diesen beiden Achsen ist nicht erforderlich. Mit anderen Worten, durch die erfindungsgemäße Lösung wird bei fertigungstechnisch und vorrichtungstechnisch reduziertem Aufwand eine Verbesserung der Lastverteilung auf mehrere Schubstücke erzielt, ohne dass Nacharbeiten oder Ausrichtarbeiten bei der Axiallagermontage erforderlich werden. Dadurch wird eine thermische Belastung des Axiallagers verringert, ein übermäßiger Verschleiß an den Schubstücken vermieden, ein Ausfall des Axiallagers verhindert und somit eine hohe Funktionssicherheit gewährleistet. Die Schubwelle kann einen Schubbund haben mit zwei beidseits angeordneten Schubstückringanordnungen. Alternativ aber nicht begrenzend hat die Schubwelle zwei Schubbünde, wobei jedem Schubbund eine Schubstückringanordnung zugeordnet ist, die sich entweder rückseitig zwischen den Schubbünden gegenüberliegen oder außerhalb der Schubbünde vorderseitig zueinander angeordnet ist. Die zur Bildung der Federringsegmente in die Federringabschnitte eingebrachten Einschnitte erstrecken sich hierbei von einem radial inneren Grund radial nach außen und sind über ihre gesamte radiale Erstreckung axial geöffnet. Bevorzugterweise haben die Einschnitte eine derartige Erstreckung in Umfangsrichtung bzw. Breite, dass sie Spalte bilden, über die die jeweils benachbarten Federringsegmente voneinander beabstandet sind. Hierdurch können die Federringsegmente ohne gegenseitige Beeinflussung elastisch verformt werden. Alternativ haben die Einschnitte eine derartige Breite, dass sich die Federringsegmente beim Verformen noch seitlich stützen bzw. führen können. Die Bildung der Federringsegmente ermöglicht eine höhere Federwirkung und somit eine sensiblere Vergleichmäßigung der Lastverteilung als bei einem über den Umfang geschlossenen Federringabschnitt.

Die Federringsegmente können unterschiedliche Ausformungen haben. Beispielsweise können sie unterschiedliche Dicken bzw. Erstreckungen in Verformungsrichtung haben. Die Verformungsrichtung ist hier die Axialrichtung der Schubwelle. Zusätzlich oder alternativ können die Einschnitte zur Bildung der Federringsegmente unterschiedliche Längen bzw. Erstreckungen in Radialrichtung haben. Durch unterschiedliche Ausformung der einzelnen Federringsegmente, kann jedem Federringsegment ein individueller Federkennwert mitgegeben werden und die Lastverteilung so an zum Beispiel an Wellenbiegelinien und dergleichen angepasst werden. Ebenso ist es vorstellbar, im Übergangsbereich vom Positionierabschnitt zu den Federringsegmenten Dickenreduzierungen und/oder Breitenreduzierungen, beispielsweise in Form von seitlichen Einschnürungen, vorzunehmen, um diesen Bereich als Verformungs- bzw. Federabschnitt auszubilden und die Federringsegmente individuell einzustellen. Die Dickenreduzierung kann beispielsweise fertigungstechnisch über eine rückseitig in den Federringabschnitt eingebrachte Ringnut erfolgen.

Insbesondere ist es vorteilhaft, wenn jedes Federringsegment ein Schubstück haltert. Hierdurch wird jedem Schubstück eine eigene Federwirkung zugeordnet, was sich weiterhin vorteilhaft auf eine Vergleichmäßigung der Lastverteilung auswirkt.

Zur Begrenzung einer maximalen Verformung der Federringabschnitte können aus Sicht der Federringabschnitte rückseitige Gehäuseabschnitte jeweils eine Axialbegrenzung für die Federringabschnitte bilden. Die Federringabschnitte laufen ab einer bestimmten elastischen Verformung auf diese auf, wodurch plastische Verformungen und somit Beschädigungen der Federringabschnitte vermieden werden. Durch unterschiedliche Federspaltdicken zwischen den Federringsegmenten und den Gehäuseabschnitten kann eine Nachgiebigkeit der Federringsegmente an beispielsweise Wellenbiegelinien und dergleichen angepasst werden.

Bei einem Ausführungsbeispiel sind die Schubstücke über Zapfen rückseitig in einer federringseitigen Stirnnut der Halterungen eingesetzt und in dieser gegen Eigenverdrehungen gesichert. Ein derartiges Haltesystem der Schubstücke lässt sich fertigungstechnisch einfach ausführen. Die Zapfen haben bevorzugterweise einen Kreisquerschnitt und sind so fertigungstechnisch als Drehteile herstellbar, die auch nachträglich mit den Schubstücken verbunden werden können. Zur Vermeidung der Eigenverdrehungen können die Schubstücke zumindest jeweils einen zusätzlichen Zapfen bzw. zapfenartige Elemente aufweisen, die bei einer Eigenverdrehung der Schubstücke auf die Stirnnutwandung auflaufen. Alternativ kann eine Verdrehsicherung der Schubstücke gegen Eigendrehbewegungen um Ihre Längsachse durch eine entsprechende Zapfenform erfolgen. Beispielsweise können die Zapfen einen elliptischen Querschnitt oder einen eckigen Querschnitt aufweisen.

Um zu verhindern, dass die Schubstücke entlang bzw. innerhalb der Stirnnut verschoben werden, kann zumindest ein Schubstück ein Festsetzelement zum Verrasten mit einem der-Federringabschnitte haben. Bevorzugterweise weist das bei der Montage zuletzt in die Stirnnut eingesetzte Schubstück das Festsetzelement auf.

Zum Einsetzen der Schubstücke in die Stirnnut kann diese eine radiale Öffnung aufweisen. Die Schubstücke werden der Reihe nach in die radiale Öffnung eingefädelt und dann in Umfangsrichtung innerhalb der Stirnnut verschoben. Hierdurch ist es möglich, die Schubstücke erst dann zu montieren, wenn die Schubwelle bereits in eine untere Lagergehäuseschale abgesenkt ist.

Bevorzugterweise sind die Positionierabschnitte jeweils ein rückseitiger nabenartiger Vorsprung, der in eine axiale Vertiefung des Lagergehäuses eintaucht. Derartige Positionierabschnitte und Vertiefungen lassen sich einfach herstellen und ermöglichen eine zuverlässige und stabile Positionierung an bzw. in dem Lagergehäuse.

Die Montage des Axiallagers und insbesondere der Halterungen lässt sich vereinfachen, wenn die Halterungen zumindest in zwei Ringbögen unterteilt sind. Hierdurch können die Halterungen radial um die Schubwelle positioniert werden und müssen nicht in axialer Richtung auf diese aufgeschoben werden. Neben der Unterteilung der Halterungen in zwei Ringbögen ist es ebenfalls vorstellbar, die Halterungen in drei, vier oder mehr Ringbögen zu unterteilen.

Sonstige vorteilhafte Ausführungsbeispiele der Erfindung sind Gegenstand weiterer Unteransprüche.

Eine Halterung zum Haltern einer Vielzahl von Schubstücken in einem Axiallager hat einen Positionierabschnitt zur ortsfesten Positionierung in dem Axiallager und einen Federringabschnitt zur axialelastischen Verformung beim Überschreiten einer auf zumindest einige der Schubstücke wirkenden Belastungsgrenze ist, wobei bezogen auf eine Längsachse der Schubwelle der Federringabschnitt radial außen und der Positionierabschnitt radial innen angeordnet sind und/oder der Federringabschnitt eine Vielzahl von in Umfangsrichtung nebeneinander liegenden Federringsegmenten aufweist, wobei zur Bildung der Federringsegmente in den Federringabschnitt radiale Einschnitte eingebracht sind. Eine derartige Halterung ermöglicht bei einem geringen fertigungstechnischen und vorrichtungstechnischen Aufwand und bei einer hohen Robustheit eine zuverlässige Vergleichmäßigung einer auf die Schubstücke wirkenden Lastverteilung. Die Halterung besteht vorzugsweise aus einem Metall bzw. einer Metalllegierung.

Im Folgenden wird ein bevorzugtes Ausführungsbeispiel der Erfindung anhand schematischer Darstellungen näher erläutert. Es zeigen:
- Figur 1: eine perspektivische Darstellung eines Bereiches einer Schubstückringanordnung eines erfindungsgemäßen Axiallagers,
- Figur 2: einen Längsschnitt durch das erfindungsgemäße Axiallager im Bereich der Schubstückringanordnung, und
- Figur 3: eine Einzeldarstellung einer in den Figuren 1 und 2 gezeigten Schubstückringanordnung.

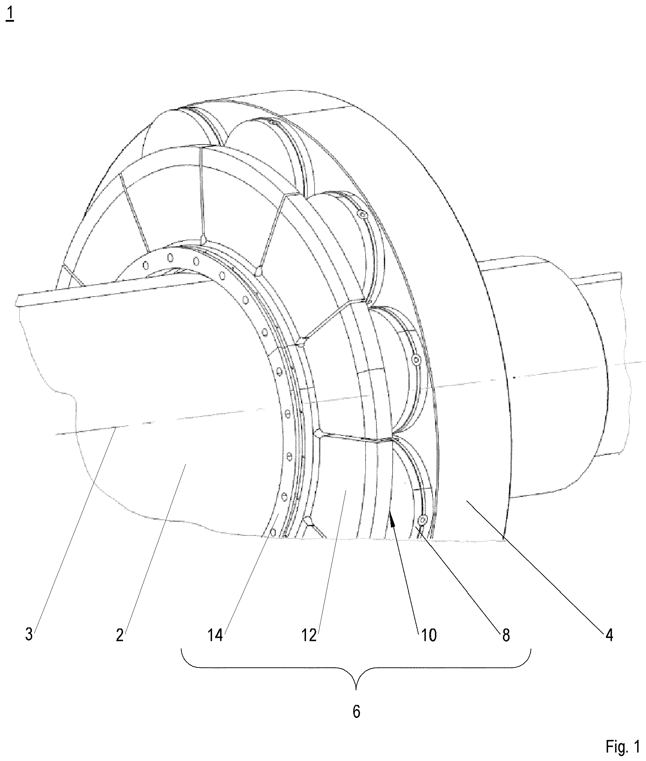

Nach Figur 1 hat ein erfindungsgemäßes Axiallager 1 zur Aufnahme einer auf einen Drehkörper wirkenden axialen Belastung eine Schubwelle 2 zum Koppeln mit dem Drehkörper. Der Drehkörper ist hier nicht gezeigt. Ebenso ist ein Lagergehäuse nicht gezeigt, in dem die Schubwelle 2 um ihre Längsachse 3 drehbar gelagert ist.

Das Axiallager 1 ist beispielsweise eine Propellerwelle eines Schiffes und nimmt Schubkräfte eines Propellers auf. Die Schubwelle 2 ist stirnseitig und fluchtend mit der Propellerwelle und einer Antriebswelle gekoppelt. Weitere Anwendungsgebiete sind Turbinen, Gebläse, Schneidkopfbagger und beispielsweise Kreiselpumpen. Die Schubwelle 2 hat einen drehfest mit ihr verbundenen bzw. einstückig mit ihr ausgebildeten Schubbund 4 und zwei beidseits des Schubbundes 4 angeordnete Schubstückringanordnungen 6, von denen aus Gründen der Übersichtlichkeit lediglich die gemäß der Darstellungen in Figur 1 linke Schubstückringanordnung 6 dargestellt ist.

Im Folgenden wird die hier gezeigte linke Schubstückringanordnung 6 erläutert. Die nicht gezeigte rechte Schubstückringanordnung ist identisch ausgebildet, so dass das im Folgenden Gesagte auch die rechte Schubstückringanordnung beschreibt.

Die Schubstückringanordnung 6 hat eine Vielzahl von Schubstücken 8 und eine ringartige Halterung 10 zum Haltern der Schubstücke 8. Die Halterung 10 selbst hat einen bezogen auf die Längsachse 3 der Schubwelle 2 radial äußeren Federringabschnitt bzw. einen Federring 12 und einen radial inneren Positionierabschnitt bzw. eine Nabe 14. Die Schubstücke 8 sind in Umfangsrichtung der Halterung 10 nebeneinander angeordnet und im Bereich der Federringe 12 zwischen der Halterung 10 und dem Schubbund 4 angeordnet.

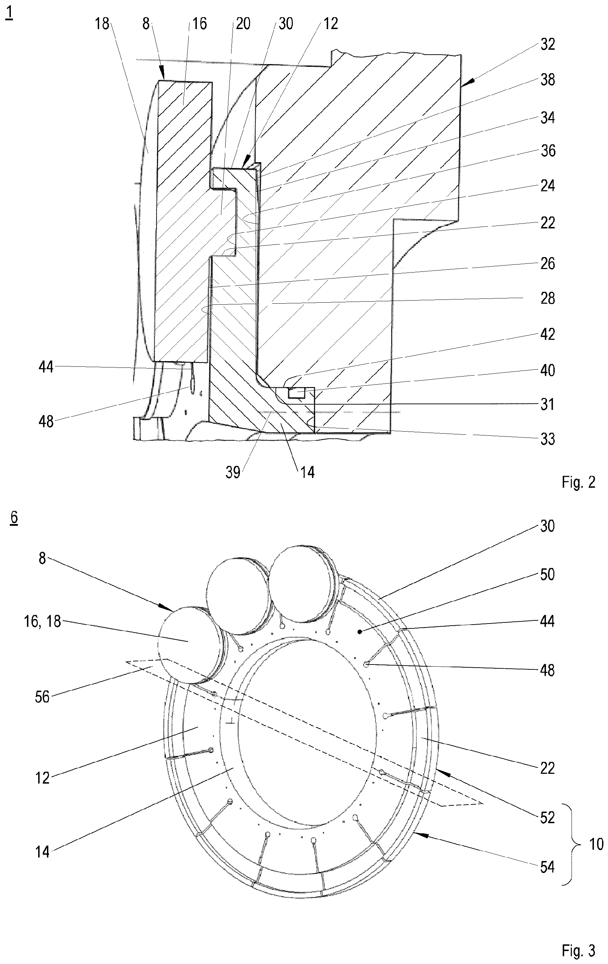

Gemäß der Darstellung in Figur 2, haben die Schubstücke 8 jeweils einen tellerförmigen Körper 16, der eine entlang dem Schubbund 4 gleitende vordere Gleitfläche 18 aufweist. Zudem haben die Schubstücke 8 jeweils Zapfen 20 zum Positionieren an der Halterung 10, der sich rückseitig und zentral von diesem erstreckt.

Zur Halterung der Schubstücke 8 bzw. zur Aufnahme der Zapfen 20 hat die Halterung 10 in ihrem Federringen 12 eine Stirnnut 22, deren axiale Erstreckung bzw. Tiefe so eingestellt ist, dass die Zapfen 20 stirnseitig am Stirnnutgrund 24 anliegen und dabei die tellerförmigen Körper 16 mit ihrer Rückseite 26 von einer die Stirnnut 22 aufnehmenden Vorderfläche 28 der Halterung 10 beabstandet sind. Die Stirnnut 22 der Halterung 10 bildet einen Ring und hat einen rechteckigen Querschnitt (siehe auch Figur 3). Sie ist über eine nicht gezeigte radiale Öffnung zum Außenumfang 30 des Federring 12 bzw. der Halterung 10 geöffnet. Die radiale Öffnung ist derart, dass die Schubstücke 8 mit ihren Zapfen 20 in dieser eingefädelt und der Stirnnut 22 zugeführt werden können.

Bevorzugterweise haben die tellerförmigen Körper 16 und die Zapfen einen Kreisquerschnitt, wobei ein Tellerkörperdurchmesser derart gewählt ist, dass sich die Schubstücke 8 im eingesetzten Zustand seitlich berühren (siehe auch Figur 3). Ein Zapfendurchmesser ist bevorzugterweise derart, dass die Schubstücke in radialer Richtung leichte Bewegungen ausführen können, als spielbehaftet in der Stirnnut 22 geführt sind. Das Spiel erleichtert unter anderem das Einführen der Schubstücke 8 in die Stirnnut 22.

Die Schubstücke 8 haben nicht gezeigte Verdrehsicherungen, beispielsweise zu den Zapfen 20 angeordnete Parallelzapfen, mittels denen eine Eigenrotation um ihre Axialachse 29 verhindert wird. Das zuletzt montierte bzw. zuletzt in die Stirnnut 22 eingeführte Schubstück 8 hat darüber hinaus ein nicht gezeigtes Festsetzelement zum Festsetzen der Schubstücke 8 in der Stirnnut 22, um eine Verschiebung der Schubstücke 8 innerhalb der Stirnnut 22 zu verhindern. Diese Verdrehsicherung kann auch in einem Zapfen bzw. zapfenartigen Element bestehen, der in eine entsprechende Sicherungsnut der jeweiligen Halterung 10 eingreift bzw. mit dieser formschlüssig verrastet.

Der Positionierabschnitt 14 ist als eine rückseitige Nabe ausgebildet, die in eine radial innere axiale Vertiefung 31 eines Abschnittes 32 des Lagergehäuses eintaucht. Eine axiale Erstreckung bzw. Tiefe der Vertiefung 31 ist derart, dass der Positionierabschnitt bzw. die Nabe 14 stirnseitig am Vertiefungsgrund 33 anliegt und hierbei rückseitig zwischen einer Rückseite 34 des Federrings 12 und einer gegenüberliegenden Gehäuseringfläche 36 ein axialer Federspalt 38 gebildet ist. Vorzugsweise ist die Halterung 10 wie durch die gestrichelte Line 39 angedeutet, im Bereich des Positionierabschnitts 14 mit dem Gehäuseabschnitt 32 verschraubt. Um zu verhindern, dass ein sich in dem Lagergehäuse befindendes Schmieröl zum Vertiefungsgrund 33 vordringt, ist in einer Außenumfangsnut der Nabe 14 ein Dichtring 40 eingesetzt, der dichtend an einer gegenüberliegenden Innenumfangsfläche 42 des Gehäuseabschnittes 32 anliegt.

Der Federspalt 38 ist ein axialer Ringspalt und bei diesem Ausführungsbeispiel radial von innen nach außen keilförmig erweitert bzw. radial von innen nach außen geöffnet.

Wie in Figur 3 gezeigt, hat der Federring 12 eine Vielzahl von radialen Einschnitten 44, die sich radial von innen nach außen erstrecken. Aus Gründen der Übersichtlichkeit ist lediglich ein Einschnitt 44 stellvertretend für alle Einschnitte der Halterung 10 beziffert.

Die Einschnitte 44 sind radial innen geschlossen und zum Außenumfang 30 des Federring 12 geöffnet. Jeder Einschnitt 44 hat einen radial innen liegenden Grund 48, der sich mit den übrigen Einschnittgrunden 48 auf einem virtuellen Kreis befindet, der sich im Übergangsbereich von den Positionierabschnitten 14 auf die Federringe 12 befindet (siehe auch Figur 2). Die Einschnittgrunde 48 sind zur Vermeidung von Kerbwirkungen verrundet. Durch die Einschnitte 44 werden eine Vielzahl von in diesem Ausführungsbeispiel gleich großen Federringsegmenten 50 gebildet, die jeweils bevorzugterweise ein Schubstück 8 aufnehmen. Aus Gründen der Übersichtlichkeit ist lediglich ein Federringsegment 50 stellvertretend für alle Federringsegmente der Halterung 10 beziffert. Beim Überschreiten einer auf zumindest einige der Schubstücke 8 wirkenden Belastungsgrenze führt das jeweilige Federringsegment 50 eine axialelastische Verformung auf, wodurch eine Vergleichmäßigung einer auf die Schubwelle 2 wirkenden axialen Lastverteilung erfolgt.

Zur Vereinfachung der Montage ist die hier gezeigte Halterung 10 in zumindest zwei Ringbögen 52, 54 unterteilt. Die Ringbögen 52, 54 sind hier zwei Ringhälften, die jeweils 180° umspannen. Zur Ausrichtung der Ringbögen 52, 54 im montierten Zustand können diese im Bereich ihrer Trennebene 56 bzw. ihrer Trennflächen entsprechende umfangsseitige nicht gezeigte Zentrierelemente aufweisen.

Im Betrieb wird die Schubwelle 2 in Rotation versetzt, wohingegen die Schubstückringanordnungen 6 ortsfest in dem Lagergehäuse gelagert ist. Der Schubbund 4 gleitet entlang den Gleitflächen 18 der Schubstücke 8, wobei er bei seiner Drehbewegung zumindest abschnittsweise jeweils in ein sich in dem Lagergehäuse 32 befindendes Ölbad eintaucht. Hierdurch bildet sich jeweils ein Schmierfilm auf den Gleitflächen 18, so dass eine Reibung zwischen dem Schubbund 4 und den Schubstücken 8 minimiert ist und die Gleitflächen 18 zudem gekühlt werden. Im normal belasteten Zustand bzw. bei koaxialer Ausrichtung der Längsachse 3 der Schubwelle 2 zur Lagergehäuseachse befinden sich die Federringsegmente 50 in gleicher bzw. in wesentlich gleicher Ausrichtung.

Sobald sich jedoch infolge einer Winkeldifferenz zwischen den Achsen eine Axiallast ungleichmäßig auf die Schubstücke 8 verteilt, stellt sich beim Überschreiten einer Belastungsgrenze eine axialelastische Verformung der Federringe 12 bzw. deren Federringsegmente 50 ein. Die hochbelasteten Schubstücke 8 übertragen größere Axialkräfte, die daraufhin entsprechend ihrer Federkennlinie einen größeren Federweg in axialer Richtung realisieren. Entsprechend kleinere Federwege werden durch gering belastet Schubstücke 8 realisiert. Diese unterschiedlichen lastabhängigen Verformungen der Federringsegmente 50 bewirken eine gleichmäßigere Lastverteilung der Axiallast auf mehrere Schubstücke 8. Eine Federkennlinie der Federringsegmente 50 ist zudem so ausgebildet, dass die Bildung des Schmierfilms gewährleistest ist.

Eine maximale axialelastische Verformung der Federringsegmente 50 wird dabei durch ein rückseitiges Auflaufen ihrer Rückseite 34 auf die jeweils gegenüberliegende Gehäuseringfläche 36 begrenzt, so dass plastische Verformungen der Federringsegmente 50 und somit eine Beschädigung der Halterungen 10 verhindert wird. Durch unterschiedliche Ausformung der einzelnen Federringsegmente 50, zum Bespiel durch unterschiedliche Dicken oder Längen der Einschnitte 44, kann jedem Federringsegment 50 ein individueller Federkennwert mitgegeben werden und die Lastverteilung so an zum Beispiel Wellenbiegelinien und dergleichen angepasst werden. Alternativ und/oder zusätzlich kann durch unterschiedliche Federspaltbreiten zwischen den Federringsegmenten 50 und der Gehäuseringfläche 36
die Nachgiebigkeit der Federringsegmente 50 an beispielsweise die Wellenbiegelinien angepasst werden.

### Bezugszeichenliste

- 1: Axiallager
- 2: Schubwelle
- 3: Längsachse
- 4: Schubbund
- 6: Schubstückringanordnung
- 8: Schubstück
- 10: Halterung
- 12: Federringabschnitt / Federring
- 16: tellerförmiger Körper
- 18: Gleitfläche
- 20: Zapfen
- 22: Stirnnut
- 24: Stirnnutgrund
- 26: Rückseite
- 28: Vorderfläche
- 29: Axialachse
- 30: Außenumfang
- 31: axialer Vertiefung
- 32: Abschnitt / Gehäuseabschnitt
- 33: Vertiefungsgrund
- 34: Rückseite
- 36: Gehäuseringfläche
- 38: Federspalt / Axialspalt
- 39: Linie
- 40: Dichtring
- 42: Innenumfangsfläche
- 44: Einschnitt
- 48: Grund
- 50: Federringsegment
- 52: Ringbogen
- 54: Ringbogen
- 56: Trennebene

## Patentansprüche

1. Axiallager (1) zur Aufnahme von axialen Belastungen, die auf einen Drehkörper einwirken, mit einem Lagergehäuse und mit einer in einem Lagergehäuse drehbar gelagerten Schubwelle (2), die mit dem Drehkörper koppelbar ist und die zumindest einen Schubbund (4) hat, mit einer Vielzahl von Schubstücken (8), die jeweils eine vordere Gleitfläche (18) zum Gleitkontakt mit dem zumindest einen Schubbund (4) haben und zwei beidseits des Schubbundes (4) angeordnete Schubstückringanordnungen (6) bilden, und mit zwei Halterungen (10) zum Haltern der der Schubstücke (8) der jeweiligen Schubstückringanordnung (6), wobei jede Schubstückringanordnung (6) jeweils eine Halterung (10) hat, **dadurch gekennzeichnet, dass** die Halterungen (10) jeweils einen Positionierabschnitt (14) zur ortsfesten Positionierung in dem Lagergehäuse und einen Federringabschnitt (12) zur axialelastischen Verformung beim Überschreiten einer auf zumindest einige der Schubstücke (8) wirkenden Belastungsgrenze hat, wobei zwischen den Federringabschnitten (12) und jeweils einem rückseitigen Gehäuseabschnitt (32) ein Federspalt (38) gebildet ist,
wobei bezogen auf eine Längsachse (3) der Schubwelle (2) die Federringabschnitte (12) radial außen und die Positionierabschnitte (14) radial innen angeordnet sind und
die Federringabschnitte (12) eine Vielzahl von in Umfangsrichtung nebeneinander liegenden Federringsegmenten (50) aufweisen, wobei zur Bildung der Federringsegmente (50) in die Federringabschnitte (12) radiale Einschnitte (44) eingebracht sind.

2. Axiallager nach Patentanspruch 1, wobei die Federringsegmente (50) unterschiedliche Dicken und/oder Einschnitte (44) zur Bildung der Federringsegmente (50) unterschiedliche Längen haben.

3. Axiallager nach Patentanspruch 1 oder 2, wobei jedes Federringsegment (50) ein Schubstück haltert.

4. Axiallager nach einem der vorhergehenden Patentansprüche, wobei die rückseitigen Gehäuseabschnitte (32) jeweils eine Axialbegrenzung für die Federringabschnitte (12) bilden.

5. Axiallager nach einem der vorhergehenden Patentansprüche, wobei die Schubstücke (8) über Zapfen (20) rückseitig in eine federringseitige Stirnnut (22) der Halterungen (10) eingesetzt und in dieser gegen Eigenverdrehungen gesichert sind.

6. Axiallager nach einem der vorhergehenden Patentansprüche, wobei zumindest ein Schubstück (8) ein Festsetzelement zum Verrasten mit einem der Federringabschnitte (12) hat.

7. Axiallager nach Patentanspruch 5, wobei die Stirnnut (22) eine radiale Öffnung zum Einsetzen der Schubstücke (8) hat.

8. Axiallager nach einem der vorhergehenden Patentansprüche, wobei die Positionierabschnitte (14) jeweils ein rückseitiger nabenartiger Vorsprung sind, der in eine axiale Vertiefung (31) des Lagergehäuses eintaucht.

9. Axiallager nach einem der vorhergehenden Patentansprüche, wobei die Halterungen (10) zumindest in zwei Ringbogen (52, 54) unterteilt sind.

## Claims

1. Axial bearing (1) for absorbing axial loads which act on a rotating body, with a bearing housing and with a thrust shaft (2) which is mounted rotatably in a bearing housing, can be coupled to the rotating body and has the at least one thrust collar (4), with a multiplicity of thrust pieces (8) which in each case have a front sliding face (18) for sliding contact with the at least one thrust collar (4), and two thrust piece ring arrangements (6) which are arranged on both sides of the thrust collar (4), and with two holders (10) for securing the thrust pieces (8) of the respective thrust piece ring arrangement (6), each thrust piece ring arrangement (6) in each case having a holder (10), **characterized in that** the holders (10) in each case have a positioning section (14) for positioning in the bearing housing in a stationary manner, and a spring washer section (12) for axially elastic deformation when a load limit which acts on at least some of the thrust pieces (8) is exceeded, a spring gap (38) being formed between the spring washer sections (12) and in each case one rear-side housing section (32), the spring washer sections (12) being arranged radially on the outside and the positioning sections (14) being arranged radially on the inside in relation to a longitudinal axis (3) of the thrust shaft (2), and the spring washer sections (12) having a multiplicity of spring washer segments (50) which lie next to one another in the circumferential direction, radial indents (44) being made in the spring washer sections (12) in order to form the spring washer segments (50) .

2. Axial bearing according to Patent Claim 1, the spring washer segments (50) having different thicknesses and/or indents (44) for forming the spring washer segments (50) having different lengths.

3. Axial bearing according to Patent Claim 1 or 2, each spring washer segment (50) securing a thrust piece.

4. Axial bearing according to one of the preceding patent claims, the rear-side housing sections (32) in each case forming an axial boundary for the spring washer sections (12).

5. Axial bearing according to one of the preceding patent claims, the thrust pieces (8) being inserted via pins (20) on the rear side into a spring washer-side end groove (22) of the holders (10) and being secured against individual rotations in the latter.

6. Axial bearing according to one of the preceding patent claims, at least one thrust piece (8) having a fixing element for latching with one of the spring washer sections (12).

7. Axial bearing according to Patent Claim 5, the end groove (22) having a radial opening for the insertion of the thrust pieces (8).

8. Axial bearing according to one of the preceding patent claims, the positioning sections (14) in each case being a rear-side hub-like projection which dips into an axial depression (31) of the bearing housing.

9. Axial bearing according to one of the preceding patent claims, the holders (10) being divided at least into two annular arcs (52, 54).

## Revendications

1. Palier axial (1) pour recevoir des contraintes axiales qui agissent sur un corps rotatif, comprenant un logement de palier et un arbre de poussée (2) supporté de manière rotative dans un logement de palier, qui peut être accouplé au corps rotatif et qui présente au moins une bride de poussée (4), avec une pluralité de pièces de poussée (8) qui présentent chacune une surface de glissement avant (18) pour le contact de glissement avec l'au moins une bride de poussée (4) et qui forment deux agencements annulaires de pièces de poussée (6) disposés des deux côtés de la bride de poussée (4), et avec deux fixations (10) pour retenir les pièces de poussée (8) de l'agencement annulaire de pièces de poussée respectif (6), chaque agencement annulaire de pièces de poussée (6) présentant à chaque fois une fixation (10),
**caractérisé en ce que** les fixations (10) présentent à chaque fois une portion de positionnement (14) pour le positionnement fixé en position dans le logement de palier et une portion de bague élastique (12) pour la déformation axiale élastique lors du dépassement d'une limite de contrainte agissant sur au moins certaines des pièces de poussée (8), une fente élastique (38) étant formée entre les portions de bague élastique (12) et une portion de boîtier arrière respective (32),
par rapport à un axe longitudinal (3) de l'arbre de poussée (2), les portions de bague élastique (12) étant disposées radialement à l'extérieur et les portions de positionnement (14) étant disposées radialement à l'intérieur et
les portions de bague élastique (12) présentant une pluralité de segments de bague élastique (50) situés les uns à côté des autres dans la direction périphérique, des entailles radiales (44) étant réalisées dans les portions de bague élastique (12) pour former les segments de bague élastique (50) .

2. Palier axial selon la revendication 1, dans lequel les segments de bague élastique (50) présentent des épaisseurs différentes et/ou les entailles (44) pour la formation des segments de bague élastique (50) présentent des longueurs différentes.

3. Palier axial selon la revendication 1 ou 2, dans lequel chaque segment de bague élastique (50) retient une pièce de poussée.

4. Palier axial selon l'une quelconque des revendications précédentes, dans lequel les portions de boîtier arrière (32) forment à chaque fois une limitation axiale pour les portions de bague élastique (12).

5. Palier axial selon l'une quelconque des revendications précédentes, dans lequel les pièces de poussée (8) sont insérées par le biais de tourillons (20) du côté arrière dans une rainure frontale (22) des fixations (10) située du côté de la bague élastique et sont fixées dans celle-ci de manière à ce qu'elles ne puissent pas tourner.

6. Palier axial selon l'une quelconque des revendications précédentes, dans lequel au moins une pièce de poussée (8) présente un élément de fixation pour l'encliquetage avec l'une des portions de bague élastique (12).

7. Palier axial selon la revendication 5, dans lequel la rainure frontale (22) présente une ouverture radiale pour l'insertion des pièces de poussée (8) .

8. Palier axial selon l'une quelconque des revendications précédentes, dans lequel les portions de positionnement (14) sont dans chaque cas une saillie arrière de type moyeu, qui s'enfonce dans un renfoncement axial (31) du logement de palier.

9. Palier axial selon l'une quelconque des revendications précédentes, dans lequel les fixations (10) sont divisées au moins en deux arcs annulaires (52, 54).
